# EUROPEAN PATENT APPLICATION

(11) **EP 3 489 116 A1**
(43) Date of publication of application: **29.05.2019**
(21) Application number: 17834165.7
(22) Date of filing: 20.07.2017
(51) Int. Cl.: B62D 51/06, A01B 33/08, B60R 19/02, B60R 19/48

(54) **ROPE HOOK STRUCTURE FOR BUMPER PART OF WALKING WORK MACHINE**

(30) Priority: 25.07.2016 JP 2016145576
(71) Applicant: YANMAR CO., LTD., Osaka-shi, Osaka 530-8311 (JP)
(72) Inventor: ISHIKAWA, Akira, Osaka-shi Osaka 530-8311 (JP); IKAI, Koji, Osaka-shi Osaka 530-8311 (JP)
(74) Representative: Kuhnen & Wacker Patent- und Rechtsanwaltsbüro PartG mbB
(86) International application number: PCT/JP2017/026367
(87) International publication number: WO 2018/021157

(57) **Abstract**

To facilitate rope hanging on a rope hook of a walking-type work machine and achieve reliable fixing to a platform of a truck or the like, a walking-type work machine includes a machine body and a bumper 20 provided in a front end portion of the machine body, the bumper 20 including: a support part 14, which abuts on a gate 51 (61) with a front portion that serves as a mooring portion; and a rope hook 30 on which a rope 40 is hung for mooring, the support part 14 being configured to be pressed to the mooring portion by tensile force that is exerted by the rope 40 being hung and fastened for the mooring on the rope hooks 30 and on retaining hooks 52 (62) provided in the mooring portion.

## Description

### Technical Field

The present invention relates to a rope hook structure for a bumper disposed in a front end portion of a walking-type work machine, which is used to fix the walking-type work machine with rope when the walking-type work machine is placed on a vehicular platform.

### Background Art

When a walking-type work machine is placed on a platform of a truck or the like to be transported, the walking-type work machine is typically fixed to the platform with rope. Techniques are known in which a rope hook is provided in a front end portion of a walking-type work machine to facilitate rope hanging in such situations. In a known technique, for example, a projecting part is formed upward from a lateral center of an upper edge portion of a balance weight and a rope hanging opening with a lateral width that is smaller than that of a grip opening is formed in the projecting part (see e.g., Patent Literature 1, hereinafter referred to as PTL1).

In another known technique, a bumper is provided so as to project further forward than a machine body and front rope hooks are provided in an upper front portion of the bumper (see e.g., Patent Literature 2, hereinafter referred to as PTL2).

### Citation List

### Patent Literature

PTL1: Japanese Patent Application Laid-Open No. 2012-196169
PTL2: Japanese Patent Application Laid-Open No. 2015-53901

### Summary of Invention

### Technical Problem

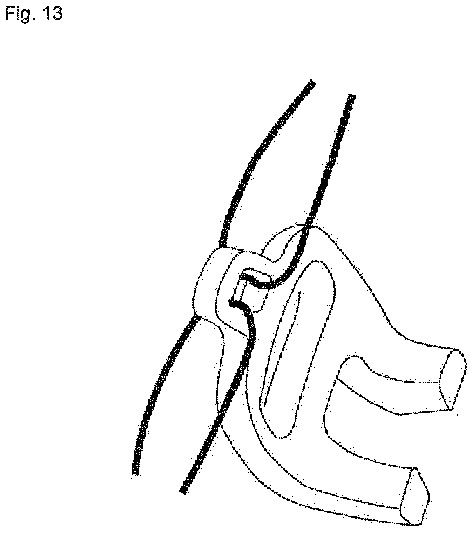

In the technique of PTL1, however, the rope hanging opening is provided centrally in a front portion of the balance weight and thus, as illustrated in FIG. 13, the walking-type work machine is fixed to a platform of a truck by retaining one end of rope on a hook on the right or left side of the platform of the truck, threading the other end of the rope through the rope hanging opening, and then hanging the rope on the hook on the aforementioned right or left side of the platform to tighten the rope, and similarly on the other of the right and left sides, by threading rope into the rope hanging opening and fastening the rope on a hook. Accordingly, the rope threading into the rope hanging opening needs to be performed at least twice, which requires two ropes or a long rope and requires that the rope or ropes be fastened on both of the right and left sides. As a result, the fixing is a troublesome operation. Also in rope removal, pulling the rope or ropes from the rope hanging opening is necessary, which causes the rope or ropes to be intertwined easily and constitutes another troublesome operation.

In the structure according to the technique of PTL2, two U-shaped hooks are formed in an upper front portion of the bumper to be opened laterally inward. Accordingly, to fix the walking-type work machine to a platform with rope, it is necessary to hang rope on the right and left hooks and then pull and tighten the rope outward in both of the right and left directions. This requires two ropes or a long rope. Moreover, in the tightening, it is necessary to move to left and right of the platform to hang and fix the rope or ropes. Thus, it takes time for the fixing. Further, in the technique of PTL2, since the bumper is formed to be bent with a pipe and extend obliquely upward and forward, the platform of the truck and the bumper are in point or line abutment with each other. Thus, when movement occurs while the bumper is fixed with rope, the abutting portion may slide easily. This involves a risk that the abutting position may be displaced to loosen the rope.

It is therefore attempted to provide a rope hook structure for a walking-type work machine, which can facilitate rope hanging and achieve reliable fixing to a platform of a truck or the like.

### Solution to Problem

The problems that the present invention attempts to solve are described above and means for solving the problems are described below.

That is, in an aspect of the present invention, a walking-type work machine includes a machine body and a bumper provided in a front end portion of the machine body, the bumper including: a support part with a front portion that abuts on a mooring portion; and a rope hook on which rope is hung for mooring, the support part being configured to be pressed to the mooring portion by tensile force that is exerted by the rope being hung and fastened for the mooring on the rope hook and on a retaining hook that is provided in the mooring portion.

In the aspect of the present invention, a grip part is provided in an upper front portion of the bumper and the rope hook is provided adjacent to the grip part.

In the aspect of the present invention, the rope hook is provided on each of right and left sides of the grip part.

In the aspect of the present invention, the rope hook includes an upward projection and a rearward projection, and the support part includes a lower support part corresponding to the upward projection and a front support part corresponding to the rearward projection.

### Advantageous Effects of Invention

The present invention brings advantageous effects described below.

That is, a bumper includes a support part and rope hooks. Accordingly, when rope is hung and fastened on the rope hooks and on retaining hooks provided in a mooring portion, the bumper is fixed to the mooring portion while the mooring portion abuts on the support part. Thus, compared to a conventional structure where only a rope hanging opening or a rope hook is pulled for tightening, shifting is hindered and firm fixing is enabled. In addition, when the rope is tightened, the tightening load can be prevented from placing burden on an axle, a wheel, or a tilling unit of the walking-type work machine, and damage can be avoided even if tightening with excessive force is performed.

### Brief Description of Drawings

[FIG. 1] An overall side view of a managing machine including a bumper according to the present invention.
[FIG. 2] A front view of the managing machine.
[FIG. 3] A perspective view of an attachment portion of the bumper.
[FIG. 4] A perspective view of the bumper.
[FIG. 5] A side view of the bumper.
[FIG. 6] A front view of the bumper.
[FIG. 7] A plan view of the bumper.
[FIG. 8] A side view illustrating a state where the bumper is tightly fixed to a gate of a light truck with rope.
[FIG. 9] A plan view illustrating the state in FIG. 8.
[FIG. 10] A side view illustrating a state where the bumper is tightly fixed to a gate of a standard-sized truck with rope.
[FIG. 11] A plan view illustrating the state in FIG. 10.
[FIG. 12] A rear view illustrating another embodiment of rope hanging.
[FIG. 13] A perspective view illustrating a state where rope is hung through a rope hanging opening formed in a conventional front weight.

### Description of Embodiments

Embodiments of a managing machine 1 as a walking-type work machine including a bumper 20 according to the present invention are described below. The description is given, assuming that direction F serves as the forward direction.

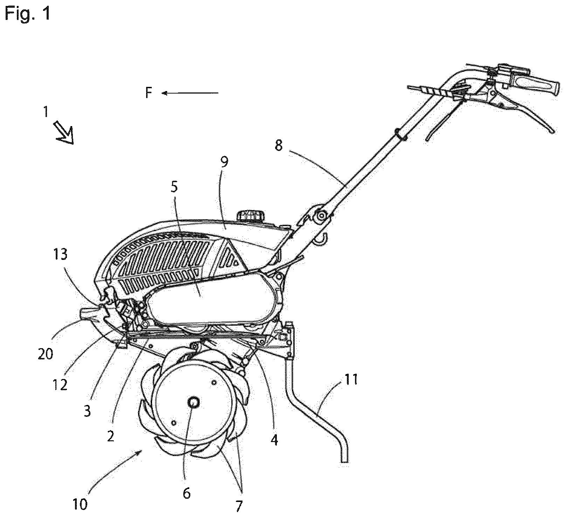

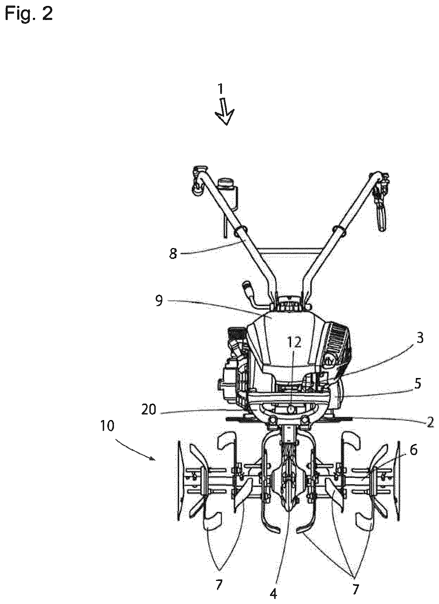

As in FIGs. 1 and 2, the managing machine 1 includes an engine 3 installed over a machine body frame 2, and a transmission case 4 is provided to stand in a laterally (i.e., left-right direction) central portion of the machine body frame 2 and behind the engine 3. A power transmission case 5 is arranged between an upper portion of the transmission case 4 and the engine 3 so that power can be transmitted. A tilling shaft 6 is laid below the transmission case 4 horizontally from side to side. That is, the tilling shaft 6 is provided to be orthogonal to the direction F, which serves as the traveling direction. Tilling tines 7 are fixed to the tilling shaft 6 radially at predetermined intervals. In this manner, a tilling device 10 is constituted.

A base of handles 8 is fixedly provided above the transmission case 4 that makes up a machine body rear portion. The handles 8 are provided to project obliquely rearward and upward. A grip is provided in a rear portion of each handle 8 so that an operator can grasp the grips. Clutch levers, accelerator levers, and so on are arranged near the grips. A fuel tank is arranged above the engine 3. A hood 9 covers the engine 3 and the fuel tank. Further, a resistance rod 11 is attached to a rear portion of the machine body frame 2 so as to be vertically adjustable in height. The bumper 20 according to the present invention is attached to a front end of the machine body frame 2.

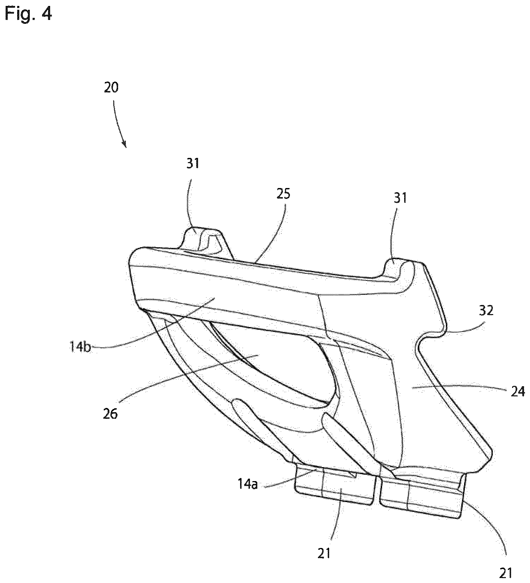

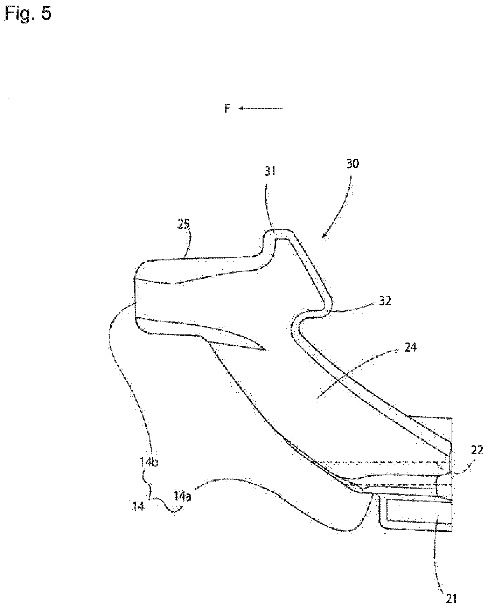

The bumper 20 according to the present invention is described in detail below with reference to FIGs. 1 to 7.

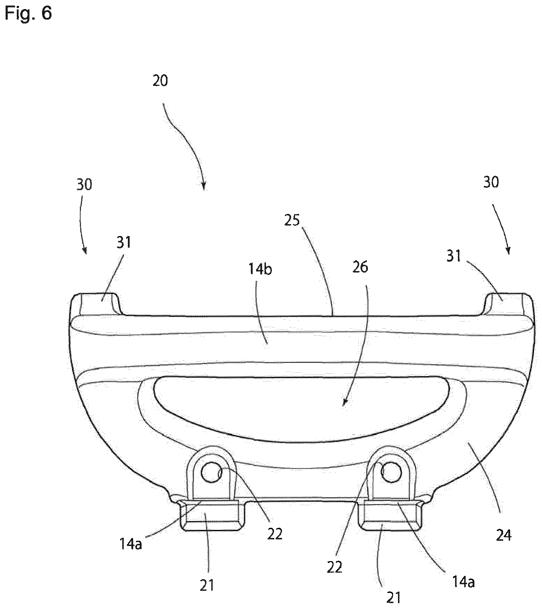

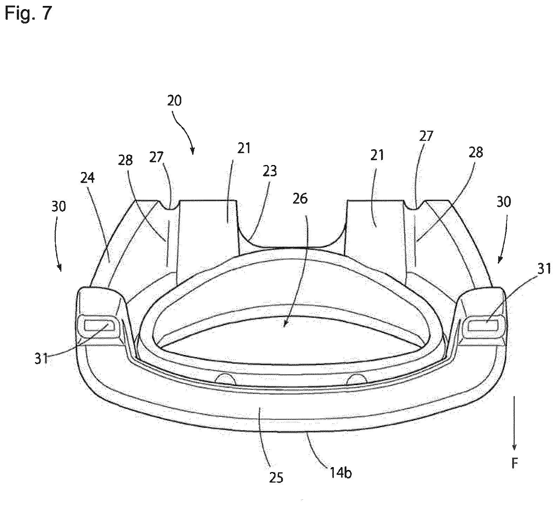

As illustrated in FIGs. 6 and 7, the bumper 20 is shaped like an approximately oval ring in a front view and a plan view, which includes: attachment base parts 21 on both sides in a lower rear portion; and attachment holes 22 formed above the attachment base parts 21 to penetrate in the fore-and-aft (front-rear) direction. The bumper 20 is fixed to the machine body frame 2 by bolts inserted into the attachment holes 22 from the front or the rear. At this time, rear surfaces of the attachment base parts 21 abut on a front end surface of the machine body frame 2.

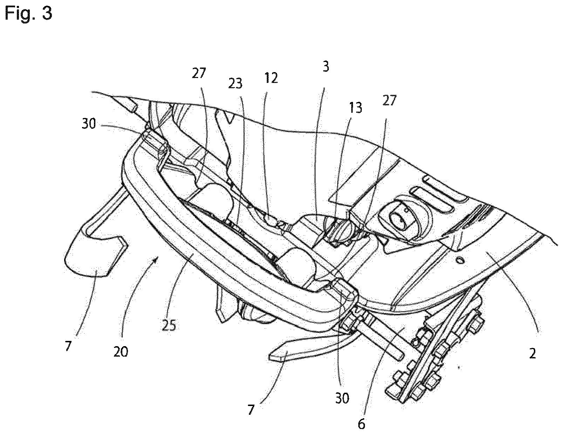

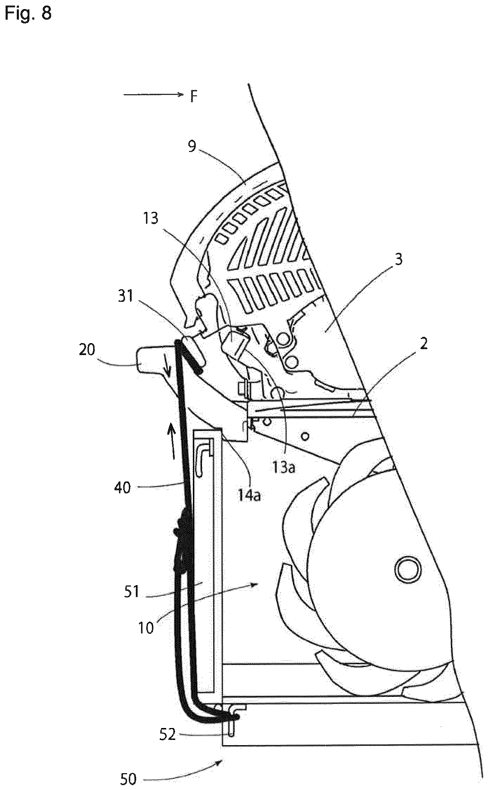

As illustrated in FIG. 7, a rear surface between the attachment base parts 21 forms a depression 23 so that when the bumper 20 is attached to the machine body frame 2, space is created between the bumper 20 and a front surface of the engine 3 as illustrated in FIG. 3. Due to the space, a drain bolt 12 which is provided on a lower front surface of a crankcase of the engine 3 can be detached. This enables waste oil to be removed. To change engine oil, a tool is inserted from below the depression 23 to loosen and detach the drain bolt 12 so that the waste oil is discharged from the space. An inspection filler cap 13 is provided obliquely above the drain bolt 12. After the drain bolt 12 is tightened, the inspection filler cap 13 that covers an oil filler inlet 13a (FIG. 8) is detached, so that a predetermined amount of engine oil can be supplied from the oil filler inlet 13a.

Side column parts 24 are provided to extend obliquely upward and forward from the attachment base parts 21. A grip part 25 connects upper portions of the right and left column parts 24. Thus, the attachment base parts 21, the side column parts 24, and the grip part 25 form a ring-like shape with a grasping opening 26 formed at the center, to make it easy to grasp the grip part 25 in a case of, for example, lifting up the managing machine 1. The grasping opening 26 enables the drain bolt 12 to be visually identified therethrough from the front at a time of oil change for example. Space is created between the grip part 25 and the front surface of the engine 3 such that the drain bolt 12 and the inspection filler cap 13 can be operated easily.

Drain depressions 27 are formed on the rear surfaces at locations outer than the attachment base parts 21. Sloping grooves 28 that lead to the drain depressions 27 and that extend obliquely vertically (i.e., up-down direction) are formed on rear surfaces of the side column parts 24. Thus, when the bumper 20 is attached to the machine body frame 2, drain holes are formed between the drain depressions 27 and a front surface of the machine body frame 2. Accordingly, rain that falls on rear portions of the side column parts 24 or engine oil that spills at a time of oil supply flows in the sloping grooves 28 to be discharged from the drain holes that the drain depressions 27 form such that no water or oil can accumulate in a rear lower portion of the bumper 20.

The grip part 25 has a thickness that allows a grasp by a human hand and is positioned in a vertically intermediate portion of the managing machine 1 to project furthest forward and protect the engine 3. Sufficient space that causes no hindrance for a grasp on the grip part 25 is formed between the grip part 25 and the front surface of the engine 3. The grip part 25 forms part of the ring-like grasping opening 26 and is thus made so that no release can happen even if a slip occurs during a movement with the grip part 25 grasped for example.

Rope hooks 30 are formed next to the grip part 25 of the bumper 20 and on rear portions of the grip part 25 on both of the right and left sides. Each of the rope hooks 30 projects from a rear portion of the grip part 25 and from an upper rear portion of the side column part 24. Each of the rope hooks 30 includes an upward projection 31 and a rearward projection 32. The upward projections 31 are formed to project further upward than an upper surface of the grip part 25 and each have a size that allows rope to be hung thereat. Each of the rearward projections 32 is formed obliquely downward and rearward relative to the upward projection 31, and is continuous with the upward projection 31. The rearward projections 32 project rearward from upper rear surfaces of the side column parts 24, and each have a size that allows rope to be hung. Accordingly, the rope 40 can be hung on the upward projections 31 and the rearward projections 32 by being wound once without being threaded into any hole. The rope hooks 30 may be formed to be integral with a front weight attached to the bumper 20 or a front end of the machine body frame 2 or with a front weight that also functions as the bumper 20.

Further, the bumper 20 includes a support part 14 that surface-abuts on a platform in order that the managing machine 1 that is placed on a platform of a truck or the like for transportation can be easily and firmly fixed to the platform by fastening with the rope 40, even for different types of platforms such as a platform of a truck and a platform of a carrier vehicle. That is, lower support parts 14a are disposed in a lower front portion of the bumper 20 so as to correspond to the upward projections 31 and a front support part 14b is disposed in an upper front portion of the bumper 20 so as to correspond to the rearward projections 32. In other words, the bumper 20 includes the lower support parts 14a and the front support part 14b, and in a side view, the lower support part 14a is positioned below the upward projection 31 and the front support part 14b is positioned further forward than the rearward projection 32. That is, the lower support part 14a and the upward projection 31 are positioned opposite to each other in the vertical direction while the front support part 14b and the rearward projection 32 are positioned opposite to each other in the fore-and-aft direction. The lower support parts 14a are positioned further forward than the attachment base parts 21 and includes an abutting surface with an approximately right angle in a side view. The front support part 14b is positioned above and further forward than the lower support parts 14a, serves as a front surface of the grip part 25, is vertical, and forms an abutting surface in the lateral direction.

The lower support parts 14a and the front support part 14b are arranged so as to be capable of abutting on a gate of a platform of a truck or a carrier vehicle. Normally, a gate surrounds a platform of a truck and retaining hooks are provided on the outer side of an upper portion of the gate at predetermined intervals in a longitudinal direction. For example, retaining hooks 52 are provided in a lower portion of a gate 51 disposed to surround a platform 50 of a light truck and retaining hooks 62 are provided in a lower portion of a gate 61 for a platform 60 of a standard-sized truck.

When placed and fixed on the platform 50 (60), the managing machine 1 is fixed to the gate 51 (61), which is a rearward mooring portion of the bumper 20, by causing the managing machine 1 to face rearward before placing the managing machine 1 on the platform 50 (60). In the present embodiment, heights are set so that when the managing machine 1 including the bumper 20 according to the present invention is placed on the platform 50 of the light truck, the lower support parts 14a are positioned at an upper end of the gate 51 of the light truck and when the managing machine is placed on the platform 60 of the standard-sized truck, the front support parts 14b abut on an upper inside surface of the gate 61. The gate 61 of the platform 60 of the standard-sized truck is higher than the gate 51 of the light truck.

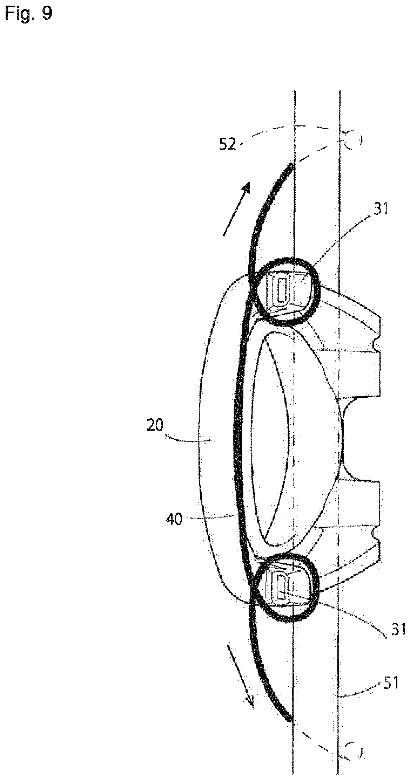

When the managing machine 1 is placed in a rear portion of the platform 50 of the light truck to be tied and fixed thereto with the rope 40, as illustrated in FIGs. 8 and 9, the fixing is performed by causing the lower support parts 14a to abut on an upper-end front corner portion of the gate 51, retaining one end of the rope 40 on the retaining hook 52 on one of the right and left sides, winding the other end of the rope 40 on the rope hooks 30, and then tying and fastening the rope 40 on the retaining hook 52 on the other of the right and left sides. When the rope 40 is tightened in this fixing, the rope 40 pulls the upward projections 31 downward and pulls the retaining hooks 52 upward. Thus, the gate 51 and the lower support parts 14a of the bumper 20 are brought into close surface-contact in two positions to be tied tightly with the rope 40, and the bumper 20 can be firmly fixed to the gate 51 accordingly. Since the rope 40 is wound on the rope hooks 30 at two positions, shifting in the lateral direction can be hindered. In addition, the managing machine 1 can be fixed in an approximately horizontal position and thus, leakage of fuel, transmission oil, or engine oil can be inhibited.

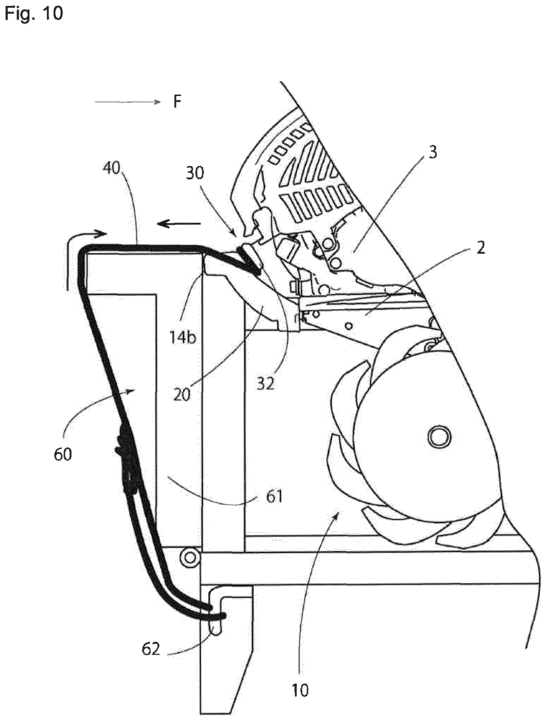

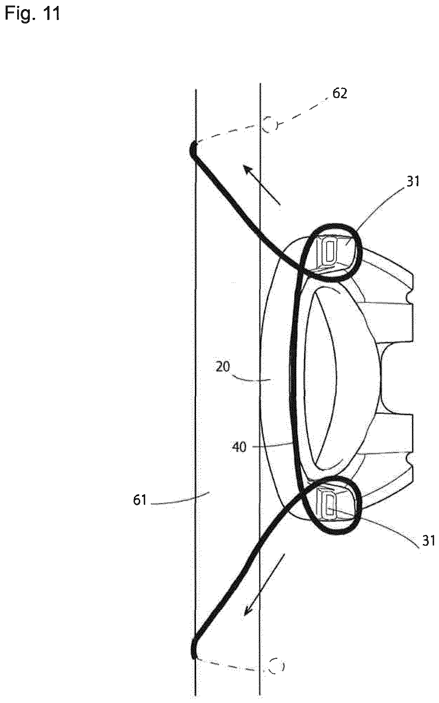

When the managing machine 1 is placed in a rear portion of the platform 60 of the standard-sized truck to be tied and fixed thereto with the rope 40, as illustrated in FIGs. 10 and 11, the fixing is performed by causing the front support part 14b to abut on an upper front surface of the gate 61, retaining one end of the rope 40 on the retaining hook 62 on one of the right and left sides, winding the other end of the rope 40 on the rope hooks 30, and then tying and fastening the rope 40 on the retaining hook 62 on the other of the right and left sides. When the rope 40 is tightened in this fixing, the rearward projections 32 are pulled rearward and the retaining hooks 62 are pulled upward, and an inner surface (front surface) of the gate 61 and a surface of the front support part 14b of the bumper 20 come into close contact and tied tightly with the rope 40 to be firmly fixed. As a result of the winding on the rope hooks 30 at two positions, shifting in the lateral direction can be hindered and the managing machine 1 can be prevented from moving on the platform 60.

Since the gate 51 (61) and the bumper 20 abut on each other at their surfaces and fixed in this manner, the managing machine 1 can avoid rotating about the tilling shaft 6 forward or rearward. Further, the rope hooks 30 on the right and left sides are retained and fastened with respect to the retaining hooks 52 (62) positioned at further toward the sides and accordingly, shifting in the lateral direction can be hindered. In addition, the managing machine 1 can be fixed in an approximately horizontal position and thus, leakage of fuel, transmission oil, or engine oil can be inhibited.

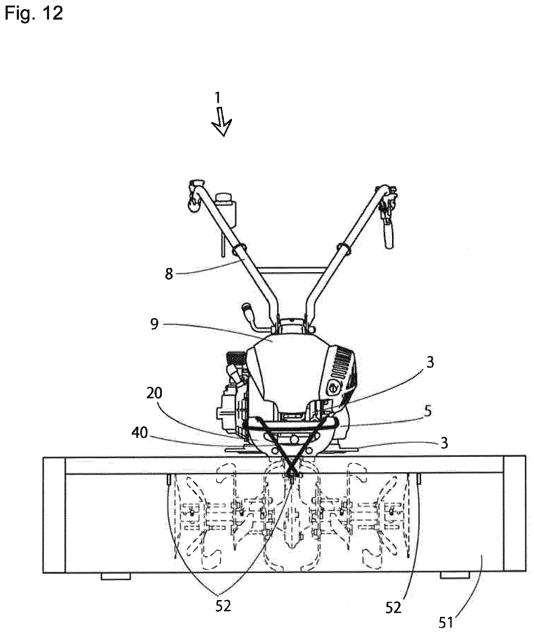

When the bumper 20 is tied to the gate 51 (61) with rope, the tying may be performed with the retaining hook 52 (62) positioned between the rope hooks 30 as illustrated in FIG. 12. In this case, supporting and fixing at three points are possible while omitting the necessity of pulling the rope laterally outward. This allows the rope 40 to be shortened in order to achieve firm fixing. Thus, the tying can be performed without requiring a long-distance movement from side to side. That is, time needed for rope hanging can be reduced.

As described above, the managing machine 1 as a walking-type work machine includes a machine body and the bumper 20 provided in a front end portion of the machine body, the bumper 20 including: the support part 14, which abuts on the gate 51 (61) with a front portion that serves as a mooring portion; and the rope hooks 30 on which the rope 40 may be hung for mooring, the support part 14 being configured to be pressed to the mooring portion by tensile force that is exerted by the rope 40 being hung and fastened for the mooring on the rope hooks 30 and on the retaining hooks 52 (62) provided in the mooring portion. Accordingly, the rope hooks 30 are positioned in the machine body front portion of the managing machine 1 at a time of placement on a platform of a truck or the like, and the fixing can be performed easily and reliably. Further, the rope 40 is tightened for the fixing while the support part 14 is in abutment with the gate 51 (61). Thus, burden that the tightening load places on an axle, a wheel, a tilling device, or the like can be reduced, and damage can be avoided even if the tightening is performed with excessive force. Once the rope 40 is tightened and fixed, the managing machine 1 can hardly shift. Thus, the managing machine 1 can be transported in a stable state by a truck or the like.

The bumper 20 includes, in its upper front portion, the grip part 25. The rope hooks 30 are provided adjacent to the grip part 25. Since an operator grasps the grip part 25 of the bumper 20 when placing the managing machine 1 onto a truck, the operator can easily recognize the rope hooks 30 provided adjacent to the grip part 25 and avoid becoming confused in hanging the rope 40.

Since the rope hooks 30 are provided on both of the right and left sides of the grip part 25, the rope 40 is hung and wound at two positions. This makes the rope 40 less likely to loosen, and thus lateral shifting can be prevented. Further, the rope hanging on the rope hooks 30 involves no necessity of threading the rope 40 into respective holes. Instead, the rope 40 is wound from one side to the other side of the right and left sides to be hung on both of the rope hooks 30, and tied fixedly on the other side. Thus, as illustrated in FIG. 13, hanging and fastening the rope both rightward and leftward is unnecessary and the length of the rope 40 can be decreased while facilitating the rope hanging and reducing the operation time.

The rope hook 30 includes the upward projection 31 and the rearward projection 32. The support part 14 includes the lower support part 14a corresponding to the upward projection 31 and the front support part 14b corresponding to the rearward projection 32. Accordingly, when the rope 40 is hung on the rope hooks 30 and pulled, the following occurs. In a case of the gate 51 of the truck which is low, the lower support parts 14a is brought into abutment with the upper portion of the gate 51 so that the tensile force of the rope 40 acts on the upward projections 31 and pulls the rope 40 rearward. In a case of the gate 61 which is high, the front support part 14b is brought into abutment with an inner surface of the gate 61 so that the tensile force of the rope 40 acts on the rearward projections 32 and pulls the rope 40 in the fore-and-aft direction (rearward in the present embodiment). As described above, with various heights of the gate, reliable fixing can be achieved by pulling the rope 40 in the vertical direction or the fore-and-aft direction without displacing the rope 40 in any of the directions.

### Industrial Applicability

The present invention is applicable to a walking-type work machine including a traveling machine body and a bumper provided in a front end of the traveling machine body, such as a walking-type managing machine that performs tilling, ridging, and so on in paddies and fields, a walking-type transplant machine, and a walking-type mowing machine.

### Reference Signs List

- 2: machine body frame
- 14: support part
- 14a: lower support part
- 14b: front support part
- 20: bumper
- 25: grip part
- 30: rope hook
- 31: upward projection
- 32: rearward projection
- 40: rope
- 51,61: gate

## Claims

1. A bumper-unit rope hook structure for a walking-type work machine including a machine body and a bumper provided in a front end portion of the machine body, the bumper including: a support part with a front portion that abuts on a mooring portion; and a rope hook on which rope is hung for mooring, the support part being configured to be pressed to the mooring portion by tensile force that is exerted by the rope being hung and fastened for the mooring on the rope hook and on a retaining hook that is provided in the mooring portion.

2. The bumper-unit rope hook structure for the walking-type work machine according to claim 1, wherein
a grip part is provided in an upper front portion of the bumper and the rope hook is provided adjacent to the grip part.

3. The bumper-unit rope hook structure for the walking-type work machine according to claim 1 or 2, wherein
the rope hook is provided on each of right and left sides of the grip part.

4. The bumper-unit rope hook structure for the walking-type work machine according to any one of claims 1 to 3, wherein
the rope hook includes an upward projection and a rearward projection, and
the support part includes a lower support part corresponding to the upward projection and a front support part corresponding to the rearward projection.
